# EUROPEAN PATENT APPLICATION

(11) **EP 2 954 776 A2**
(43) Date of publication of application: **16.12.2015**
(21) Application number: 14748835.7
(22) Date of filing: 06.02.2014
(51) Int. Cl.: A01J 25/00, A23C 19/068

(54) **SYSTEM, METHOD AND DEVICE FOR PRODUCING STRIPS OF SPUN CHEESE**

(30) Priority: 07.02.2013 MX 2013001524
(71) Applicant: Sigma Alimentos, S. A. De C. V., Nuevo León 66254 (MX)
(72) Inventor: CHÁVEZ VÁLDEZ, Daniel David, Nuevo León 66412 (MX); MENDEZ MERINO, Emilio, Guanajuato 37250 (MX); DE HAENE ROSIQUE, Gregorio José, Nuevo León 66278 (MX)
(74) Representative: Elzaburu S.L.P.
(86) International application number: PCT/MX2014/000042
(87) International publication number: WO 2014/123403

(57) **Abstract**

A system, method and device for producing strips of spun cheese from a paste of hot cheese that can form a fibrous texture when drawn. The hot cheese paste is drawn in the form of a strip of spun cheese by means of an arrangement of consecutive driving pulleys, in which tangential velocity of each driving pulley is greater than that of the immediately preceding pulley so as to generate a greater tensile force on the strip of cheese as it passes through the consecutive driving pulleys.

## Description

### TECHNICAL FIELD OF THE INVENTION

The present invention relates to the preparation of spun cheese, better known by its Italian term as "pasta filata", more particularly it relates to a system, method and device for producing strips of spun cheese by driving pulleys.

### BACKGROUND OF THE INVENTION

The spun cheeses or made as pasta filata are cheeses in which the curd is elaborated to develop a fiber or texture in strand form, such feature can be explained by the structural arrangement that casein molecules undergo by subjecting the paste to high temperatures and mechanical work, which is developed during kneading, and the rise of temperature of the hot water supply.

The continuous action of the kneading, either mechanical or manual, to which the paste is submitted, orients and aligns proteins, which favors the establishing of chemical bonds of various kinds between adjacent molecules of the aligned proteins, one such example are the hydrogen bonds that hold proteins together.

Subsequently, the cheese paste once stabilized is drawn to form strips of cheese, which usually are rolled into balls or hanks to obtain the characteristic cheese form, e.g., Oaxaca cheese type.

Traditionally, said strips were achieved by manual labor, which consists in handling the hot paste by hand and drawing it to achieve the desired size of the strips. Obviously this is a job with certain risks to the health of people engaged in said activity. In addition, there is a significant reduction in product yield.

The spun of the cheese paste is important because the presentation of the finished cheese is a ball or hank that takes its form precisely by rolling the strip. This is the characteristic with which the cheese is identified by the end customer.

A large number of machines, devices and systems have been made to industrialize the production process of strips of spun cheese, mostly using extruders.

Examples of existing systems and methods for producing strips of spun cheese are described in the following patent documents:
Meyer Matthew, in US patent US-4,288,465 describes a process for producing a cheese product that has properties of longitudinal fibrous texture formed with a cheese capable of forming a fibrous texture when it is drawn out. The process involves extruding a hot continuous cheese strip through a extruder, to which a longitudinal extraction force is continually applied when pulled out of the extruder by the use of a pulley mechanism so as to induce fibrous texture properties to the strip and reduce its cross section. Afterwards the strip of cheese is cooled off. The technique described in US patent 4,288,465 has the disadvantage of causing a constant tensile force to the strip of cheese, as the set of pulleys have the same diameter and thus, the same tangential velocity as they are connected to the same belt driven mechanism. At a given moment, this constant pulling force causes the strip of cheese not necessarily to present a fibrous texture because at a certain moment said strip of cheese does not present any longer aligned fibers as it is necessary to increase the traction force while the strip of cheese is drawn to achieve alignment.

In the US patent document US-5,792,497 of Abler, a machine for forming strips of cheese is described, by using worm gears, which carry the cheese paste to an extrusion head to transform the paste of strips of cheese. The result obtained is a strip of fibrous cheese. Furthermore, in US Patent US-5,967,026 of Nelles, a machine for producing cheeses from spun cheese is described. Said machine comprises at least four chambers with hot water to cook the paste as it passes through them, and therefore they also require hoppers and worm gears, and engines to elaborate and transport the mixture, therefore resulting very complex because of the many components.

The disadvantage of the techniques described above employing extruders, pushing paste of hot cheese through extrusion heads, either by pressure from worm gears or another pushing mechanism, is that they originate strips of cheese with a denser paste consistency and less fibrous or spun texture compared with strips of cheese produced using traditional methods. This effect of less fibrous texture is due to the pressure at which the cheese paste is submitted as it is being extruded, which prevents the formation of fibers or texture in the form of spun. Likewise, subjecting the cheese paste to a constant pulling force causes the fibers do not reach complete alignment.

Therefore it is necessary to provide a system, method and device for producing strips of spun cheese to prevent extrusion by thrust and thus emulate an articraft pulling process, that is, cause a tensile force that as the strip of cheese is being drawn. Said tensile force increases and thereby produces a strip of cheese with a consistent fibrous obtaining an efficient alignment of its fibers.

### SUMMARY OF THE INVENTION

In view of the above described and in order to provide a solution to the limitations encountered, it is object of the invention to provide a system for producing strips of spun cheese from a paste of hot cheese that can form a fibrous texture when drawn. The system has a hopper to contain the hot cheese paste; one or more nozzles connected to the hopper through which the hot cheese paste passes; and an arrangement of consecutive driving pulleys next to each nozzle to apply a tensile force to the cheese paste exiting from said nozzles to form strips of spun cheese, each driving pulley has a tangential velocity that is greater than that of the immediately preceding pulley so as to generate a greater tensile force on the strip of cheese as it passes through the consecutive driving pulleys.

Another object of the invention, it is to provide a device for producing strips of spun cheese from a paste of hot cheese that can form a fibrous texture when drawn. The device has an arrangement of consecutive driving pulleys to apply a tensile force to the cheese paste to form strips of spun cheese, each driving pulley has a tangential velocity that is greater than that of the immediately preceding pulley so as to generate a greater tensile force on the strip of cheese as it passes through the consecutive driving pulleys.

It is also an object of the invention to provide a method for producing strips of spun cheese from a paste of hot cheese that can form a fibrous texture when drawn. The method has the steps of flowing a hot cheese paste through a nozzle; drawing the hot cheese paste that comes out of the nozzle, making it pass through an arrangement of consecutive driving pulleys to form a strip of spun cheese, each driving pulley has a tangential velocity that is greater than that of the immediately preceding pulley so as to generate a greater tensile force on the strip of cheese as it passes through the consecutive driving pulleys; and cooling said strip of spun cheese as it exits said arrangement of consecutive driving pulleys.

### BRIEF DESCRIPTION OF THE DRAWINGS

The characteristic details of the invention are described in the following paragraphs in conjunction with the accompanying figures, which are for the purpose of defining the invention but without limiting its scope.
Figure 1 illustrates a side view of a system and device distributed horizontally to produce strips of spun cheese according to the present invention.
Figure 2 illustrates a top view of a system and device distributed horizontally to produce strips of spun cheese according to the present invention.
Figure 3 illustrates a perspective view of an arrangement of consecutive driving pulleys and idler pulleys of the system and device to produce strips of spun cheese according to the present invention.
Figure 4 illustrates a side view of a system and device distributed vertically to produce strips of spun cheese according to the present invention.
Figure 5 illustrates a top view of an embodiment of grooves of driving pulleys according to the present invention.

### DETAILED DESCRIPTION OF THE INVENTION

The present invention is a system, method and device for producing a strip of cheese having a longitudinal fiber texture obtained from hot cheese paste capable of forming a fibrous texture when it is drawn.

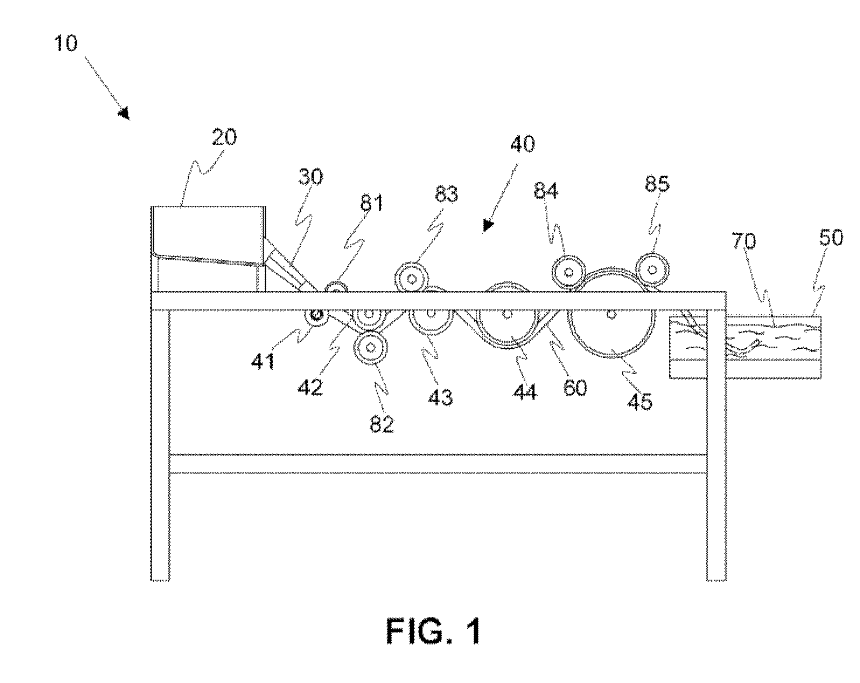

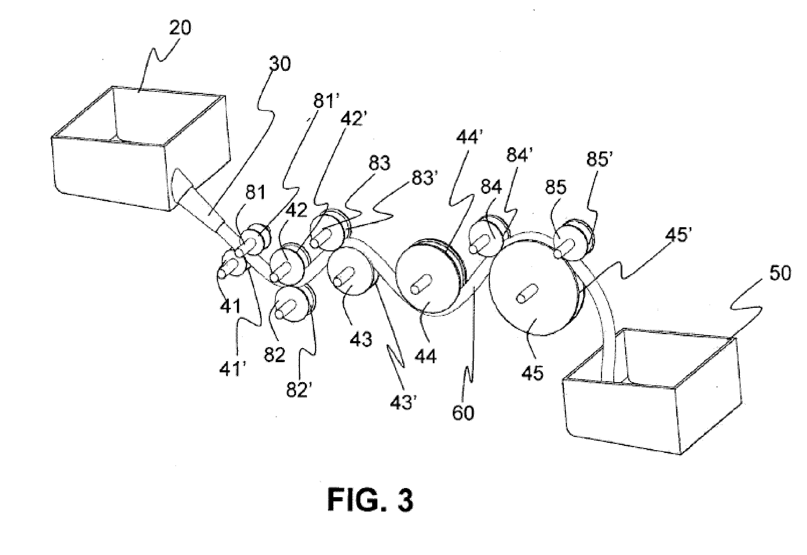

Referring to Figures 1, 2, and 3 wherein a side view, a top view and a perspective view respectively of a system and device for producing strips of spun cheese according to the present invention are illustrated. The system 10 consists of a hopper 20, one or more nozzles 30, an arrangement of consecutive driving pulleys 40 and a container 50.

The hopper 20 serves to contain the hot cheese paste and is formed by a right sidewall, a left sidewall, a front sidewall and a rear sidewall. The hopper 20 is preferably made of aluminum or stainless steel.

To maintain the hot cheese paste at the right temperature, the hopper 20 has a first heater (not shown), which can be a hot water heater, a hot air heater, a steam heater, electric resistance heater, ultrasonic heater, or combinations thereof.

At the base or bottom of the hopper 20 one or more nozzles 30 are connected, arranged in an inclined manner and which are made of aluminum or stainless steel. The nozzles 30 may be interchangeable, that is, can be arranged, removed or replaced by others using a clamping mechanism (not shown).

In one embodiment of the invention, the nozzles 30 are connected to a second heater which can be a hot water heater, a hot air heater, a steam heater, electric resistance heater, ultrasonic heater, or combinations thereof. The first heater of the hopper 20 and the second heater of the nozzles 30 may be interconnected, thus taking advantage of the same circulating hot fluid.

Although the hot cheese paste contained in the hopper 20 can flow freely through the nozzles 30, it is recommended to exert a pressure from 0 to 0.2 kg/cm² on the hot cheese paste inside the hopper 20 to achieve a proper tension of the strips of spun cheese, as these are prepared according to the invention. Therefore, in a first embodiment, the hopper 20 can have on the inside a helical worm 25 to apply said pressure to the hot cheese paste. In a second embodiment, the hopper 20 may have inside a movable plate to push the hot cheese paste with said pressure to move up through the nozzles 30. In a third embodiment the hopper 20 may be enclosed in a chamber to which pressurized air is applied to achieve said pressure on the hot cheese paste.

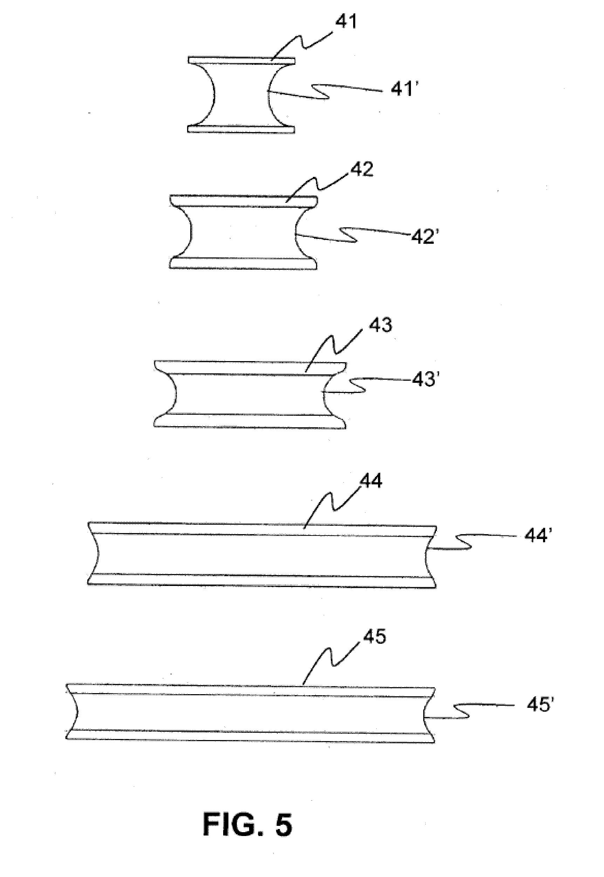

Close to each nozzle 30, it is an arrangement of consecutive driving pulleys 40 to apply a tensile force to the cheese paste coming out of said nozzles 30 to form strips of spun cheese 60. In this embodiment, the arrangement of consecutive driving pulleys 40 is comprised of a first driving pulley 41, a second driving pulley 42, a third driving pulley 43, a fourth driving pulley 44, and a fifth driving pulley 45, so that the first driving pulley 41 has a first tangential velocity, the second driving pulley 42 has a tangential velocity greater than the tangential velocity of the first driving pulley 41, the third driving pulley 43 has a tangential velocity greater than the tangential velocity of the second driving pulley 42, the fourth driving pulley 44 has a tangential velocity greater than the tangential velocity of the third driving pulley 43, and the fifth driving pulley 45 has a tangential velocity greater than the tangential velocity of the fourth pulley 44, that is, in the arrangement of consecutive driving pulleys 40 each driving pulley has a tangential velocity that is greater than that of the immediately preceding pulley. Also, in an alternative embodiment as illustrated in Figure 5, the first driving pulley 41, the second driving pulley 42, the third driving pulley 43, the fourth pulley 44, and the fifth driving pulley 45 have its groove 41', 42', 43', 44' and 45', respectively, such that the groove 41' of the first driving pulley 41 has a greater depth, the groove 42 'of the second driving pulley 42 has a depth less than the depth of the groove 41' of the first driving pulley 41, the groove 43' of the third driving pulley 43 has a depth less than the depth of the groove 42' of the second driving pulley 42, the groove 44' of the fourth pulley 44 has a depth less than the depth of the groove 43' of the third driving pulley 43, and the groove 45' of the fifth driving pulley 45 has a depth less than the depth of the groove 44' of the fourth pulley 44, that is, in the arrangement of driving pulleys 40, each driving pulley has a groove with a depth minor than that of the immediately preceding pulley.

In another embodiment, in relation to the same Figure 5, the groove 41' of the first driving pulley 41 has a greater width, the groove 42' of the second driving pulley 42 has a smaller width than the width of the groove 41' of the first driving pulley 41, the groove 43' of the third driving pulley 43 has a width less than the width of the groove 42' of the second driving pulley 42, the groove 44' of the fourth driving pulley 44 has a smaller width than the width of the groove 43' of the third driving pulley 43, and the groove 45' of the fifth driving pulley 45 has a smaller width than the width of the groove 44' of the fourth driving pulley 44, that is, in the arrangement of driving pulleys 40, each driving pulley has a groove with a width minor than that of the immediately preceding pulley.

The driving pulleys 41, 42, 43, 44, and 45 of the arrangement of consecutive driving pulleys 40 may be made of stainless steel 304 or 304L, polyethylene or ultra high molecular weight.

When the cheese paste exiting from the nozzle 30, it is placed first on the groove 41' of the first driving pulley 41 with the lower tangential velocity and major depth and groove width of the arrangement of consecutive driving pulleys 40. Upon contact of the cheese paste with the surface of the groove 41' of the first driving pulley 41, a first tensile force is exerted on the cheese paste giving rise to the drawing of a strip of spun cheese 60, the intensity of the tensile force exerted on the cheese paste is related to the tangential velocity of the first driving pulley 41 and the friction caused between the surfaces of the groove 41' and the cheese paste.

Upon exiting the strip of spun cheese 60 of the first driving pulley 41, the strip of spun cheese is placed on the groove 42' of the second driving pulley 42 that has a greater tangential velocity and depth and width smaller with respect to the first driving pulley 41. Upon contact of the strip of spun cheese 60 with the surface of the groove 42' of the second driving pulley 42, a second tensile force is produced, greater than the first tensile force of the first driving pulley 41 on strip of spun cheese 60, causing a second drawing and major alignment of cheese fibers respect the first drawing.

Upon exiting the strip of spun cheese 60 of the second driving pulley 42, the strip of spun cheese is placed on the groove 43' of the third driving pulley 43 that has a greater tangential velocity and depth and width smaller with respect to the second driving pulley 42. Upon contact of the strip of spun cheese 60 with the surface of the groove 43' of the third driving pulley 43, a third tensile force is produced, greater than the second tensile force of the second driving pulley 42 on strip of spun cheese 60, causing a third drawing and major alignment of cheese fibers respect the second drawing.

Upon exiting the strip of spun cheese 60 of the third driving pulley 43, the strip of spun cheese is placed on the groove 44' of the fourth driving pulley 44 that has a greater tangential velocity and depth and width smaller with respect to the third driving pulley 43. Upon contact of the strip of spun cheese 60 with the surface of the groove 44' of the fourth driving pulley 44, a fourth tensile force is produced, greater than the third tensile force of the third driving pulley 43 on strip of spun cheese 60, causing a fourth drawing and major alignment of cheese fibers respect the third drawing.

Upon exiting the strip of spun cheese 60 of the fourth driving pulley 44, the strip of spun cheese is placed on the groove 45' of the fifth driving pulley 45 that has a greater tangential velocity and depth and width smaller with respect to the fourth driving pulley 44. Upon contact of the strip of spun cheese 60 with the surface of the groove 45' of the fifth driving pulley 45, a fifth tensile force is produced, greater than the fourth tensile force of the fourth driving pulley 44 on strip of spun cheese 60, causing a fifth drawing and major alignment of cheese fibers respect the fourth drawing.

Finally, the strip of spun cheese 60 is continuously being elaborated as further cheese paste is fed to the arrangement of consecutive driving pulleys 40.

In view of the above, the arrangement of driving pulleys 40 allows drawing the hot cheese paste in steps whereas the tensile force is increased each time, allowing to form a strip of spun cheese 60 with aligned fibers, as drawing with an increasing tensile force, the fibers of the cheese paste tend to align more according to each step, producing a strip of spun cheese 60 which decreases in its cross section by the staggered alignment caused by its fibers. Therefore, in the arrangement of consecutive driving pulleys 40 each driving pulley that immediately follows the preceding one, has a groove with a smaller depth and/or smaller width as shown in Figure 5.

The grooves 41', 42', 43', 44', and 45' of the driving pulleys 41, 42, 43, 44, and 45, have inclined and rounded edges which allow the strip of spun cheese 60 not to overflow from said groove.

To keep the strip of spun cheese 60 aligned and in contact with the grooves 41', 42', 43', 44', and 45' of the driving pulleys 41, 42, 43, 44, and 45, respectively, idler pulleys are included 81, 82, 83, 84, and 85 distributed between the driving pulleys 41, 42, 43, 44, and 45. The idler pulleys 81, 82, 83, 84, and 85 may be made of 304 or 304L stainless steel, or polyethylene of ultra high molecular weight and may have the same or a different diameter. In one embodiment, these idler pulleys 81, 82, 83, 84, and 85 have a groove 81', 82', 83', 84', and 85', respectively, in a plane form or convex form, with a perpendicular view of the groove, forming a male-female interconnection groove between the driving pulley groove and the idler pulley groove in order to keep the strip of spun cheese 60 into the groove of the driving pulley.

In a first embodiment, the driving pulleys 41, 42, 43, 44, and 45 of the arrangement of consecutive driving pulleys 40 may be connected by its rotation axis to a mechanism of chain-gear (not shown) which in turn is connected to a motor (not shown) so that the driving pulleys 41, 42, 43, 44, and 45 move at the same angular velocity. However, it is necessary that the driving pulleys 41, 42, 43, 44, and 45 have different diameters so as to have different tangential velocities, that is, in the arrangement of consecutive driving pulleys 40, each driving pulley has a diameter that is larger than that of the immediately preceding pulley, and the same angular velocity that of the immediately preceding pulley.

In another embodiment, the driving pulleys 41, 42, 43, 44, and 45 of the arrangement of consecutive driving pulleys 40 may have the same diameter, but should rotate at different angular velocities, for which each driving pulley 41, 42, 43, 44, and 45 may be connected at its rotation axis to a separate motor, so as to have different tangential velocities in each driving pulley 41, 42, 43, 44, and 45, that is, in the arrangement of consecutive driving pulleys 40, each driving pulley has a angular velocity that is major than that of the immediately preceding pulley, and the same diameter that of the immediately preceding pulley.

Preferably, the rotation axes of each of the driving pulleys 41, 42, 43, 44, and 45 of the arrangement of consecutive driving pulleys 40 are located in the same horizontal line, separated by sufficient distance to allow retaining adequate tension of the strip of spun cheese 60 in the arrangement of consecutive driving pulleys 40 for proper drawing.

The arrangement of the strip of spun cheese 60 through the driving pulleys 41, 42, 43, 44, and 45 and idler pulleys 81, 82, 83, 84, and 85 along a line, successively, allowing the strip of spun cheese 60 to pass through said arrangement of pulleys, forming a wave trajectory where the wave size is variable, depending on the diameter of each of the driving pulleys 41, 42, 43, 44, and 45.

In the terminal arrangement of the driving pulleys 40 the container 50 is located to receive the strip of spun cheese 50 that is being prepared and to contain a liquid 70, which serves to cool it. The liquid 70 in the container 50 is preferably cold and may be water or brine. The container 50 is preferably made of aluminum or stainless steel.

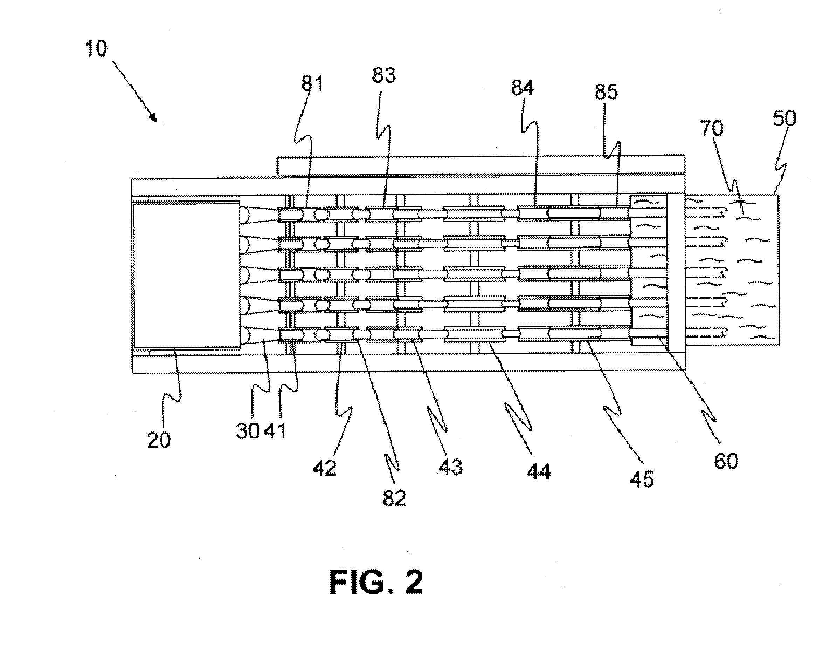

As shown in Figure 2, for each nozzle 30 there is one arrangement of consecutive driving pulleys 40, including its driving pulleys 41, 42, 43, 44, and 45, and in turn each arrangement of consecutive driving pulleys 40 has its respective set of idler pulleys 81, 82, 83, 84, and 85. Thus, in this figure a hopper 20 is shown feeding five nozzles 30 which in turn feed five arrangements of consecutive driving pulleys 40 to form five strips of spun cheese 60 continually that are finally collected and cooled in the container 50.

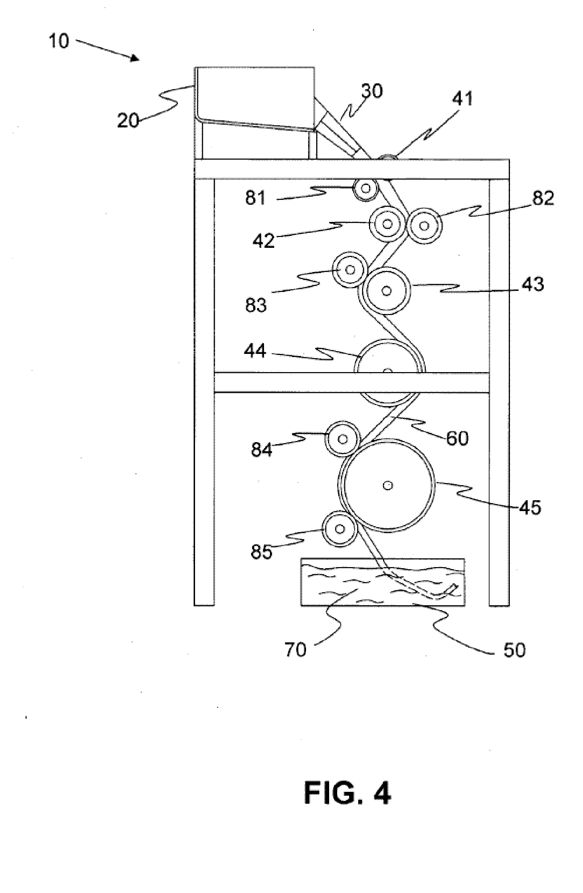

Now in the Figure 4 is illustrated a side view of the system and device for producing strips of spun cheese according to the present invention, but distributed in a vertical plane, so that the hopper 20 is located at the top, followed by the nozzles 30 and the arrangement of consecutive driving pulleys 40 whose driving pulleys 41, 42, 43, 44, and 45 are aligned vertically in conjunction with the idler pulleys 81, 82, 83, 84, and 85. At the bottom the container 50 receives the strip of spun cheese 60 that is being produced, and contains liquid 70. This vertical distribution allows a self-load of the strip of spun cheese 60 in the driving pulleys 41, 42, 43, 44, and 45. Thus, it is achieved that the strip of spun cheese 60 passes to the following driving pulley by effect of gravity, and finally reduce the pressure required in the hopper 20 of feeding the hot cheese pate into the nozzles 30.

The following describes a method producing strips of spun cheese from a paste of hot cheese that can form a fibrous texture when drawn, the method comprising the steps of flowing a hot cheese paste through a nozzle at a temperature from 45 °C to 70 °C and applying a pressure from 0 to 0.2 kg/cm2 to it. Then, the hot cheese paste is drawn when passing through the nozzle, passing it through an arrangement of consecutive driving pulleys to form a strip of spun cheese, where each driving pulley has a tangential velocity that is greater than that of the immediately preceding pulley so as to generate a greater tensile force on the strip of cheese as it passes through the consecutive driving pulleys; and finally, cooling the strip of spun cheese in water or brine as it exits the arrangement of consecutive of driving pulleys.

The tangential velocity of the driving pulleys is determined in function of the fluidity of the hot cheese paste, the temperature of the hot cheese paste, the number of nozzles, the hot cheese paste volume per unit of time that passes through the nozzles, and moreover by the initial and final diameter required of the strip of spun cheese to be elaborated.

Table 1 shows an embodiment to determine the tangential velocity of the driving pulleys required to produce the strip of spun cheese in accordance with the present invention.

### Data

| | | |
|---|---|---|
| Cheese density | 1.05 | gr/cm³ |
| Diameter of the nozzle | 5.08 | cm |
| Diameter of the strip of cheese spun | 2.54 | cm |
| Velocity of the paste cheese at nozzle outcome | 2.62 | cm/seg |
| Cheese flow | 55.75808 | g/sec |
| Cheese flow kg | 200.7291 | kg/hr |
| Angular velocity | 0.2096 | rpm |

**Table 1**

| Serial number of driving pulley in arrangement of driving pulleys from the nearest to the nozzle | Driving pulleys of 7.08 cm wide | | | | |
|---|---|---|---|---|---|
| | Diameter (cm) | Angular velocity (rpm) | Tangential velocity (cm/sec) | Groove depth (cm) | Groove width (cm) |
| 1 | 13 | 4 | 2.62 | 2.5 | 5.6 |
| 2 | 17 | 4 | 3.63 | 2.2 | 4.8 |
| 3 | 24 | 4 | 5.02 | 1.8 | 4.2 |
| 4 | 33 | 4 | 6.95 | 1.6 | 3.6 |
| 5 | 46 | 4 | 9.62 | 1.3 | 3.2 |
| 6 | 59 | 4 | 12.42 | 1.2 | 2.8 |
| 7 | 76 | 4 | 16.03 | 1.0 | 2.6 |
| 8 | 99 | 4 | 20.70 | 0.9 | 2.3 |

Table 2 shows the reduction of the cross section of the strip of spun cheese as it passes through the arrangement of consecutive driving pulleys in function of the data of Table 1 in accordance with the present invention.

**Table 2**

| Serial number of driving pulley in arrangement of driving pulleys from the nearest to the nozzle | Strip of spun cheese | | | |
|---|---|---|---|---|
| | Diameter (cm) | Diameter reduction percentage | Area of cross section (cm²) | Area reduction percentage |
| 1 | 5.08 | 0 | 20.26 | 0 |
| 2 | 4.32 | 15 | 14.64 | 28 |
| 3 | 3.67 | 15 | 10.58 | 28 |
| 4 | 3.12 | 15 | 7.64 | 28 |
| 5 | 2.65 | 15 | 5.52 | 28 |
| 6 | 2.33 | 12 | 4.27 | 23 |
| 7 | 2.05 | 12 | 3.31 | 23 |
| 8 | 1.81 | 12 | 2.56 | 23 |

Although the invention has been described with reference to specific descriptions, these descriptions are not intended to be interpreted in a limiting sense. Various modifications to the described elements and alternative elements of the invention will become apparent to those skilled in the art with reference to the description of the invention. It should be appreciated by those skilled in the art that the conception and specific embodiment disclosed may be readily utilized as a basis for modifying or designing other structures for carrying out the same purposes of the present invention. Those skilled in the art must take into account that such equivalent arrangements do not separate from the spirit and scope of the invention as set forth in the appended claims.

Therefore, it is contemplated that the claims cover any such modifications or arrangements that fall within the true scope of the invention.

## Claims

1. A system for producing strips of spun cheese from a paste of hot cheese that can form a fibrous texture when drawn, comprising:
a hopper for containing said hot cheese paste;
one or more nozzles connected to said hopper through which said hot cheese paste passes; and
an arrangement of consecutive driving pulleys next to each nozzle to apply a tensile force to the cheese paste exiting from said nozzles to form strips of spun cheese;
the system **characterized in that** each driving pulley has a tangential velocity that is greater than that of the immediately preceding pulley so as to generate a greater tensile force on the strip of cheese as it passes through the consecutive driving pulleys.

2. The system according to claim 1, **characterized in that** further includes a first heater connected to said hopper.

3. The system according to claim 2, **characterized in that** said first heater is a hot water heater, a hot air heater, a steam heater, electric resistance heater, ultrasonic heater, or combinations thereof.

4. The system according to claim 1, **characterized in that** said hopper includes a helical worm to push said cheese paste.

5. The system according to claim 1, **characterized in that** said hopper includes a mobile plate to push said cheese paste.

6. The system according to claim 1, **characterized in that** said nozzle is interchangeable.

7. The system according to claim 1, **characterized in that** the driving pulleys are in a straight line.

8. The system according to claim 1, **characterized in that** rotation axis of the driving pulleys are in a same horizontal line.

9. The system according to claim 1, **characterized in that** the driving pulleys have the same diameter.

10. The system according to claim 1, **characterized in that** in said arrangement of consecutive driving pulleys, each driving pulley has a diameter that is larger than that of the immediately preceding pulley.

11. The system according to claim 1, **characterized in that** in said arrangement of consecutive driving pulleys, each driving pulley has a groove with a depth minor than that of the immediately preceding pulley.

12. The system according to claim 1, **characterized in that** in said arrangement of consecutive driving pulleys, each driving pulley has a groove with a width minor than that of the immediately preceding pulley.

13. The system according to claim 1, **characterized in that** each driving pulley has a groove with inclined and rounded edges.

14. The system according to claim 1, **characterized in that** further includes a set of idler pulleys distributed between said arrangement of consecutive driving pulleys.

15. The system according to claim 14, **characterized in that** each idler pulley has a groove in a plane form or convex form.

16. The system according to claim 1, **characterized in that** further includes a container of cold water or brine next to said arrangement of consecutive driving pulleys to receive the produced strips of spun cheese.

17. The system according to claim 1, **characterized in that** the system is distributed on a horizontal plane.

18. The system according to claim 1, **characterized in that** the system is distributed on a vertical plane.

19. A device for producing strips of spun cheese from a paste of hot cheese that can form a fibrous texture when drawn, the device comprises an arrangement of consecutive driving pulleys to apply a tensile force to the cheese paste to form strips of spun cheese; the device **characterized in that** each driving pulley has a tangential velocity that is greater than that of the immediately preceding pulley so as to generate a greater tensile force on the strip of cheese as it passes through the consecutive driving pulleys.

20. The device according to claim 19, **characterized in that** the driving pulleys are in a straight line.

21. The device according to claim 19, **characterized in that** rotation axis of the driving pulleys are in a same horizontal line.

22. The device according to claim 19, **characterized in that** the driving pulleys have the same diameter.

23. The device according to claim 19, **characterized in that** in said arrangement of consecutive driving pulleys, each driving pulley has a diameter that is larger than that of the immediately preceding pulley.

24. The device according to claim 19, **characterized in that** in said arrangement of consecutive driving pulleys, each driving pulley has a groove with a depth minor than that of the immediately preceding pulley.

25. The device according to claim 19, **characterized in that** in said arrangement of consecutive driving pulleys, each driving pulley has a groove with a width minor than that of the immediately preceding pulley.

26. The device according to claim 19, **characterized in that** each driving pulley has a semicircular throat.

27. The device according to claim 19, **characterized in that** each driving pulley has a groove with inclined and rounded edges.

28. The device according to claim 19, **characterized in that** further includes a set of idler pulleys distributed between said arrangement of consecutive driving pulleys.

29. The device according to claim 28, **characterized in that** each idler pulley has a groove in a plane form or convex form.

30. The device according to claim 19, **characterized in that** the arrangement of consecutive driving pulleys is distributed on a horizontal plane.

31. The device according to claim 19, **characterized in that** the arrangement of consecutive driving pulleys is distributed on a vertical plane.

32. A method for producing strips of spun cheese from a paste of hot cheese that can form a fibrous texture when drawn, the method **characterized in that** comprises the steps of:
flowing a hot cheese paste through a nozzle;
drawing the hot cheese paste that comes out of the nozzle, making it pass through an arrangement of consecutive driving pulleys to form a strip of spun cheese, wherein each driving pulley has a tangential velocity that is greater than that of the immediately preceding pulley so as to generate a greater tensile force on the strip of cheese as it passes through the consecutive driving pulleys; and
cooling said strip of spun cheese as it exits said arrangement of consecutive driving pulleys.

33. The method according to claim 32, **characterized in that** in said step of flowing a hot cheese paste through a nozzle, said hot cheese paste has a temperature from 45 °C to 70 °C.

34. The method according to claim 32, **characterized in that** in said step of flowing a hot cheese paste through a nozzle, to said hot cheese paste is applied a pressure from 0 to 0.2 kg/cm².

35. The method according to claim 32, **characterized in that** the tangential velocity of said driving pulleys is determined according to:
fluidity of said hot cheese paste;
temperature of the hot cheese paste;
number of nozzles;
hot cheese volume per time unit passing through the nozzles; and
further of the initial and final diameter of the required strip of spun cheese.
